(19) Europäisches Patentamt
European Patent Office
Office européen des brevets

(11) EP 4 579 774 A1

# (12) EUROPEAN PATENT APPLICATION

(43) Date of publication:
**02.07.2025 Bulletin 2025/27**

(21) Application number: **24223009.2**

(22) Date of filing: **23.12.2024**

(51) International Patent Classification (IPC):
***H01M 4/04*** (2006.01) ***H01M 4/13*** (2010.01)
***H01M 4/62*** (2006.01) ***H01M 4/66*** (2006.01)
***H01M 10/0525*** (2010.01) ***H01M 10/42*** (2006.01)

(52) Cooperative Patent Classification (CPC):
**H01M 4/622; H01M 4/0404; H01M 4/13; H01M 4/661; H01M 4/667; H01M 10/0525; H01M 10/4235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 KR 20230194295**

(71) Applicant: **SK On Co., Ltd.**
**Seoul 03161 (KR)**

(72) Inventors:
- **YANG, Jung Min**
  **34124 Daejeon (KR)**
- **YOU, Seung Jong**
  **34124 Daejeon (KR)**
- **LEE, Dong Hoon**
  **34124 Daejeon (KR)**
- **PARK, Kyung Sup**
  **34124 Daejeon (KR)**
- **WON, Jong Hyeon**
  **34124 Daejeon (KR)**

(74) Representative: **Prüfer & Partner mbB**
**Patentanwälte · Rechtsanwälte**
**Sohnckestraße 12**
**81479 München (DE)**

## (54) ELECTRODE FOR SECONDARY BATTERY, MANUFACTURING METHOD THEREOF, AND LITHIUM SECONDARY BATTERY INCLUDING THE SAME

(57) According to an embodiment, an electrode for a secondary battery is provided, the electrode for a secondary battery including: an electrode current collector, and an electrode mixture layer and an insulating layer on at least one surface of the electrode current collector, wherein the insulating layer includes a copolymer, and the copolymer includes a repeating unit having an imide group and a rubber-based repeating unit.

According to an embodiment of the present disclosure, it is possible to prevent ignition from occurring in the lithium secondary battery to improve safety.

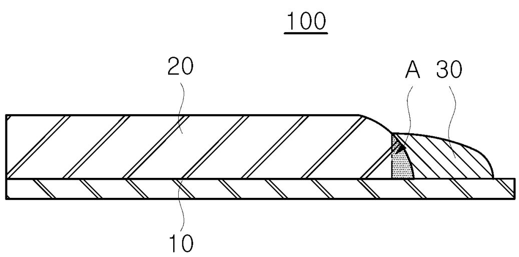


FIG. 1

EP 4 579 774 A1

## Description

## BACKGROUND

### 1. FIELD

The present disclosure relates to an electrode for a secondary battery, a manufacturing method thereof, and a lithium secondary battery including the same.

### 2. DESCRIPTION OF RELATED ART

Recently, research on an electric vehicle (EV) that may replace a fossil fuel-based vehicle, which is one of the main causes of air pollution, is being actively conducted. A lithium secondary battery having a high discharge voltage and output stability may be used as a power source for such an electric vehicle (EV).

During a process of the operation of the lithium secondary battery, a safety issue due to a short circuit inside the secondary battery may occur. Such a short circuit phenomenon may occur due to direct contact between electrodes of the secondary battery, and when the short circuit state continues, it can cause a fire inside the secondary battery.

Accordingly, there is a need to develop a technology that can prevent problems such as the short circuit and fire caused thereby inside the secondary battery.

## SUMMARY

An aspect of the disclosed technology is to prevent low-voltage defects from occurring due to a short circuit between electrodes in a lithium secondary battery.

Another aspect of the disclosed technology is to prevent ignition from occurring in a lithium secondary battery.

Another aspect of the disclosed technology is to prevent electrode fracture from occurring during a process for manufacturing an electrode for a lithium secondary battery.

Another aspect of the disclosed technology is to improve the manufacturing processability of an electrode for a lithium secondary battery.

According to an aspect of the disclosed technology, an electrode for a lithium secondary battery includes: an electrode current collector, and an electrode mixture layer and an insulating layer on at least one surface of the electrode current collector, wherein the insulating layer includes a copolymer, and the copolymer includes a repeating unit having an imide group and a rubber-based repeating unit.

In some embodiments of the disclosed technology, the imide group may be represented by Formula 1.

[Formula 1]

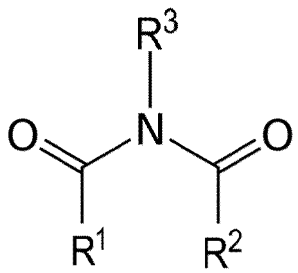

In Formula 1, $R^1$, $R^2$, and $R^3$ are independently hydrogen or an organic group, respectively.

In some embodiments of the disclosed technology, the repeating unit having the imide group may further include an amide group.

In some embodiments of the disclosed technology, the amide group may be represented by Formula 2.

[Formula 2]

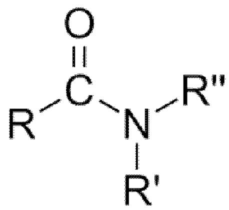

In Formula 2, R, R' and R" are independently hydrogen or an organic group, respectively.

In some embodiments of the disclosed technology, the repeating unit having the imide group may include a repeating unit comprising polyamideimide (PAI). In some embodiments of the disclosed technology, the rubber-based repeating unit may include at least one of a styrene-butadiene rubber (SBR)-based repeating unit, a butadiene rubber (BR)-based repeating unit, a hydrogenated nitrile-butadiene rubber (HNBR)-based repeating unit, a nitrile-butadiene rubber (NBR)-based repeating unit, an acrylic rubber-based repeating unit, a butyl rubber-based repeating unit, and a fluororubber-based repeating unit.

In some embodiments of the disclosed technology, the copolymer may include a graft copolymer in which a second block including a rubber-based repeating unit is grafted onto a first block including a repeating unit having an imide group.

In some embodiments of the disclosed technology, the first block may include a repeating unit having an imide group and an amide group, and the second block may include a hydrogenated nitrile butadiene rubber (HNBR)-based repeating unit.

In some embodiments of the disclosed technology, the first block in the graft copolymer may be included in an amount of 50 to 95 wt% based on a total weight of the graft copolymer.

In some embodiments of the disclosed technology, the second block in the graft copolymer may be included in an amount of 5 to 50 wt% based on the total weight of the graft copolymer.

In some embodiments of the disclosed technology, the insulating layer may further include a ceramic material.

In some embodiments of the disclosed technology, the electrode current collector may include a non-coated portion on which an electrode mixture layer is not disposed on the electrode current collector.

In some embodiments of the disclosed technology, the insulating layer may cover a portion of the non-coated portion and a portion of the electrode mixture layer.

In some embodiments of the disclosed technology, the insulating layer may be disposed on the non-coated portion.

According to an aspect of the disclosed technology, a method of manufacturing an electrode for a lithium secondary battery includes: forming an electrode mixture layer and an insulating layer on at least one surface of an electrode current collector, wherein the insulating layer includes a copolymer, and the copolymer includes a repeating unit having an imide group and a rubber-based repeating unit.

A lithium secondary battery according to an embodiment of the disclosed technology includes the electrode for a lithium secondary battery according to any one of the above-described embodiments.

BRIEF DESCRIPTION OF DRAWINGS

Certain aspects, features, and advantages of the disclosed technology may be illustrated by the following detailed description with reference to the accompanying drawings.

FIG. 1 is a cross-sectional view conceptually illustrating an electrode for a secondary battery according to an embodiment.

FIG. 2 is a cross-sectional view conceptually illustrating an electrode for a secondary battery according to another embodiment.

FIG. 3 is a plan view conceptually illustrating the shape of the electrode for a secondary battery illustrated in FIG. 1 as viewed from the upper surface.

## DETAILED DESCRIPTION

Hereinafter, the disclosed technology disclosed in this patent and the example embodiments are described in detail with reference to the attached drawings. However, the embodiments of the technology can be modified into various other forms, and the scope thereof is not limited to the example embodiments described below. In addition, the disclosed technology disclosed in this patent document may be applied not only limitedly to the configurations of the example

embodiments described below, but also may be configured by selectively combining all or part of each example embodiment so that various modifications can be made.

As described above, the development of a technology that can prevent a short circuit from occurring inside the lithium secondary battery is required. According to an embodiment, a short circuit between electrodes may be prevented by coating an insulating layer on a non-coated portion of an electrode current collector in which an electrode mixture layer is not disposed. For example, when an insulating layer is coated on a non-coated portion of a cathode current collector, a short circuit may be prevented from occurring even if the non-coated portion contacts an anode.

Meanwhile, when an insulating layer is coated on the non-coated portion of the electrode current collector, there may be a difference in elongation during electrode rolling depending on differences in properties of respective materials included in the electrode mixture layer, the electrode current collector, and the insulating layer. Accordingly, a foil curling phenomenon in which a non-coated portion is bent at an interface between the electrode mixture layer and the non-coated portion of the electrode current collector, may occur. When the foil curling phenomenon occurs, various quality defects may occur in a process of manufacturing a secondary battery to be described later.

For example, during an electrode rolling or notching process, a phenomenon in which stress may accumulate at an interface between the non-coated portion and the insulating layer, causing electrodes to fracture or the interface to be torn off may occur, and during a welding process, wrinkles may be formed in an electrode tab portion. When the insulating layer includes both a ceramic material and a polymer binder, this phenomenon may be further aggravated due to a difference between the ceramic composition and the polymer composition.

According to an embodiment of the disclosed technology, the above-described problems may be alleviated. Hereinafter, embodiments of the disclosed technology will be specifically described with reference to FIGS. 1 to 3.

FIG. 1 is a cross-sectional view conceptually illustrating an electrode for a secondary battery according to an embodiment.

FIG. 2 is a cross-sectional view conceptually illustrating an electrode for a secondary battery according to another embodiment.

FIG. 3 is a plan view conceptually illustrating the shape of the electrode for a secondary battery illustrated in FIG. 1 as viewed from the upper surface.

## Electrode for a lithium secondary battery

An electrode for a lithium secondary battery 100 according to an embodiment includes an electrode current collector 10, and an electrode mixture layer 20 and an insulating layer 30 on at least one surface of the electrode current collector, wherein the insulating layer 30 includes a copolymer, and the copolymer includes a repeating unit having an imide group and a rubber-based repeating unit.

The insulating layer 30 includes a copolymer including a repeating unit having an imide group and a rubber-based repeating unit, so that the insulating layer 30 may have excellent insulating properties and heat resistance, excellent peeling resistance in an electrolyte, and improved softness, thereby having improved elongation. Accordingly, quality deterioration due to an electrode fracture phenomenon, or the like during a secondary battery manufacturing process to be described later, may be prevented.

The repeating unit having the imide group includes an imide group and may impart insulation properties to a copolymer and an insulating layer 30 including the same. In the present specification, the imide group may be a functional group comprised of two acyl groups bonded to nitrogen. For example, the imide group can be represented by the following Formula 1.

[0044] [Formula 1]

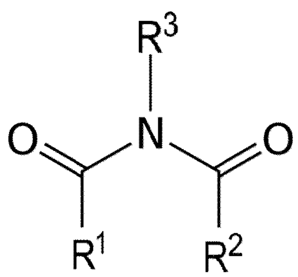

In Formula 1, $R^1$, $R^2$, and $R^3$ are independently hydrogen or an organic group, respectively.

In some embodiments of the disclosed technology, the repeating unit having the imide group may further have an amide group. In the present specification, the amide group may be a functional group comprising a carbonyl group bonded

to nitrogen. For example, the amide group may be a functional group represented by the following Formula 2.

[Formula 2]

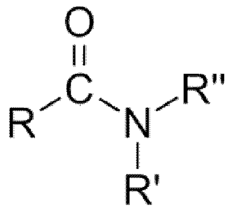

In Formula 2, R, R', and R" are independently hydrogen or an organic group, respectively.

In some embodiments of the disclosed technology, the repeating unit having the imide group may include a repeating unit comprising polyamideimide (PAI) (hereinafter, a repeating unit derived from polyamideimide). Since the insulating layer 30 includes repeating units including an imide group and an amide group, the peeling resistance in an electrolyte may be further improved, and the elongation may be improved, so that the interface may be prevented from being torn off during an electrode rolling/notching process.

The copolymer further includes a rubber-based repeating unit in addition to the repeating unit having the above-described imide group. The rubber-based repeating unit includes a rubber-based repeating unit having ductility, and may impart ductility to a copolymer including the same. When the copolymer included in the insulating layer 30 includes a rubber-based repeating unit, the elongation of the insulating layer 30 may be further improved.

The rubber-based repeating unit is not particularly limited. For example, the rubber-based repeating unit may include at least one of a styrene-butadiene rubber (SBR)-based repeating unit, a butadiene rubber (BR)-based repeating unit, a hydrogenated nitrile-butadiene rubber (HNBR)-based repeating unit, a nitrile-butadiene rubber (NBR)-based repeating unit, an acrylic rubber-based repeating unit, a butyl rubber-based repeating unit, and a fluororubber-based repeating unit. Specifically, the rubber-based repeating unit may be a hydrogenated nitrile-butadiene rubber (HNBR)-based repeating unit.

In some embodiments of the disclosed technology, the copolymer may be a block copolymer or a graft copolymer including a first block and a second block. Specifically, the copolymer may be a graft copolymer in which a second block is grafted onto a first block.

In some embodiments of the disclosed technology, the first block may include a repeating unit having the imide group described above, and the second block may include a rubber-based repeating unit described above. Specifically, the copolymer may include a graft copolymer in which a second block including a rubber-based repeating unit is grafted onto a first block including a repeating unit having an imide group.

In some embodiments of the disclosed technology, the first block may comprise repeating units comprising polyamideimide, and the second block may comprise rubber-based repeating units.

In some embodiments of the disclosed technology, the first block may include repeating units having an imide group and an amide group, and the second block may include repeating units of hydrogenated nitrile butadiene rubber (HNBR).

In some embodiments of the disclosed technology, the copolymer may include a graft copolymer in which a polymer comprising a rubber-based repeating unit is grafted onto a polymer comprising a repeating unit having an imide group. For example, the graft copolymer may include polyamideimide (PAI) grafted with hydrogenated nitrile butadiene rubber (HNBR).

In some embodiments of the disclosed technology, the first block in the graft copolymer may be included in an amount of 50 to 95 wt% based on a total weight of the graft copolymer. For example, the first block in the graft copolymer may be included in an amount of 55 to 90 wt%, 60 to 85 wt%, 65 to 75 wt%, 70 to 85 wt%, or 80 to 90 wt%, based on a total weight of the graft copolymer. Specifically, the first block in the graft copolymer may be included in an amount of 70 wt% or more or 80 wt% or more based on the total weight of the graft copolymer, and may be included in an amount of 90 wt% or less or 85 wt% or less based on the total weight of the graft copolymer.

When a graft ratio of the first block is too low, swelling of the insulating layer 30 may easily occur, which may cause peeling of the insulating layer within an electrolyte. On the other hand, when the graft ratio of the first block is too high, a ductility improvement rate of the insulating layer 30 may be insufficient.

In some embodiments of the disclosed technology, the second block in the graft copolymer may be included in an amount of 5 to 50 wt% based on a total weight of the graft copolymer. For example, the second block in the graft copolymer may be included in an amount of 10 to 45 wt%, 15 to 40 wt%, 25 to 35 wt%, 15 to 30 wt%, or 10 to 20 wt%, based on a total weight of the graft copolymer. Specifically, the second block in the graft copolymer may be included in an amount of 10 wt%

or more or 15 wt% or more based on the total weight of the graft copolymer, and may be included in an amount of 30 wt% or less or 20 wt% or less based on the total weight of the graft copolymer.

When a graft ratio of the second block is too low, the ductility improvement rate of the insulating layer 30 may be insufficient. On the other hand, when the graft ratio of the second block is too high, the ductility of the insulating layer 30 is excellent, but swelling may easily occur, which may cause peeling of the insulating layer in an electrolyte.

In some embodiments of the disclosed technology, a weight ratio of the first block and the second block in the graft copolymer may be 50:50 to 95:5, 55:45 to 90:10, 60:40 to 85:15, 65:35 to 75:25, 70:30 to 85:15, or 80:20 to 90:10.

In some embodiments of the disclosed technology, the insulating layer 30 may further include a ceramic material. The ceramic material having the insulating properties is not particularly limited as long as it is a material for preventing short circuits between electrodes. For example, the ceramic material may include at least one selected from the group consisting of alumina ($Al_2O_3$), boehmite (AlO(OH)), silicon oxide (SiOx; $0<x\leq2$), alumina hydrate ($Al_2O_3 \cdot nH_2O$), aluminum nitride (AlN), silicon carbide (SiC), and magnesium oxide (MgO).

In some embodiments of the disclosed technology, a thickness of the insulating layer 30 may be 3 um to 50 um. For example, the thickness of the insulating layer 30 may be 10 um.

Components of the electrode current collector 10 are not particularly limited. For example, the electrode current collector 10 may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. A thickness of the electrode current collector 10 is not particularly limited. For example, the thickness of the electrode current collector 10 may be 0.1 to 50 um.

When the electrode for the secondary battery 100 is an anode, in some embodiments of the disclosed technology, the electrode current collector 10 may be copper foil (Cu-foil). When the electrode for the secondary battery 100 is a cathode, in some embodiments of the disclosed technology, the electrode current collector 10 may be aluminum foil (Al-foil).

The electrode current collector 10 may include a non-coated portion on which an electrode mixture layer 20 is not disposed on the electrode current collector. According to an embodiment, the insulating layer 30 may cover a portion of the non-coated portion and a portion of the electrode mixture layer 20. Specifically, an insulating layer 30 on the non-coated portion and an insulating layer 30 on the electrode mixture layer 20 may be connected to each other continuously. More specifically, the insulating layer 30 may be disposed to cover a portion of the electrode mixture layer 20 from a portion of the non-coated portion 20 (see FIGS. 1 and 3). In this case, exposure of the electrode current collector 10 may be prevented. In the electrode for the secondary batter 100, a region in which the insulating layer 30 covers a portion of the electrode mixture layer may be an overlap region A. According to another embodiment, the insulating layer 30 may be disposed on the non-coated portion (see FIG. 2).

The electrode mixture layer 20 may include an electrode active material. When the electrode for the lithium secondary battery is an anode, the electrode mixture layer 20 may be an anode mixture layer including an anode active material. When the electrode for the lithium secondary battery is a cathode, the electrode mixture layer 20 may be a cathode mixture layer including a cathode active material.

The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphitic carbon such as natural graphite, artificial graphite, graphitized cokes, graphitized mesocarbon microbeads (MCMB), and graphitized mesophase pitch-based carbon fibers (MPCF).

Examples of the amorphous carbon may include hard carbon, soft carbon, cokes, mesocarbon microbeads (MCMB), or mesophase pitch-based carbon fibers (MPCF).

Elements included in the lithium alloy may be, for example, aluminum, zinc, bismuth, cadmium, antimony, silicon, lead, tin, gallium or indium.

The silicon-containing material is not particularly limited as long as it contains silicon, and may be an active material that can be alloyed with lithium (Li). For example, the silicon-containing material may be at least one selected from the group consisting of silicon (Si), silicon oxide (SiOx; $0<x<2$), metal-doped silicon oxide (SiOx; $0<x<2$), carbon-coated silicon oxide (SiOx; $0<x<2$), silicon-carbon composite (Si-C), and silicon alloy.

The cathode active material is not particularly limited. For example, the cathode active material may include a lithium-nickel metal oxide. The lithium-nickel metal oxide may further include at least one of cobalt (Co), manganese (Mn), and aluminum (Al).

In some embodiments of the disclosed technology, the cathode active material or the lithium-nickel metal oxide may include a layered structure or a crystal structure represented by the following Formula 3.

[Formula3] $$Li_xNi_aM_bO_{2+z}$$

In Formula 3, $0.9 \leq x \leq 1.2$, $0.6 \leq a \leq 0.99$, $0.01 \leq b \leq 0.4$, $-0.5 \leq z \leq 0.1$ may be satisfied. As described above, M may include Co, Mn, and/or Al.

A chemical structure represented by Formula 3 represents a bonding relationship included in the layered structure or crystal structure of the cathode active material and does not exclude other additional elements. For example, M includes Co and/or Mn, and Co and/or Mn may serve as a main active element of the cathode active material together with Ni. Formula 3 is provided to represent the bonding relationship of the main active elements and should be understood as Formula encompassing the introduction and substitution of additional elements.

In some embodiments of the disclosed technology, auxiliary elements added to the main active element to enhance the chemical stability of the cathode active material or the layered structure/crystal structure may be further included. The auxiliary elements may be mixed together into the layered structure/crystal structure to form a bond, and in this case, it should be understood that the auxiliary elements are also included within the chemical structure range represented by Formula 3.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements contributing to the capacity/output activity of the cathode active material, for example, together with Co or Mn, such as Al.

For example, the cathode active material or the lithium-nickel metal oxide may include a layered structure or crystal structure represented by the following Formula 3-1.

[Formula 3-1] $Li_xNi_aM1_{b1}M2_{b2}O_{2+z}$

In Formula 3-1, M1 may include Co, Mn, and/or Al. M2 may include the auxiliary elements described above. In Formula 3-1, $0.9 \leq x \leq 1.2$, $0.6 \leq a \leq 0.99$, $0.01 \leq b1+b2 \leq 0.4$, $-0.5 \leq z \leq 0.1$ may be satisfied.

The cathode active material may further include a coating element or a doping element. For example, elements substantially identical to or similar to the auxiliary elements described above may be used as coating elements or doping elements. For example, the above-described elements may be used alone or in combination of two or more thereof.

The coating element or doping element may be present on a surface of lithium-nickel metal oxide particles, or may penetrate through the surface of the lithium-nickel metal oxide particles and be included in the bonding structure represented by Formula 3 or Formula 3-1.

The cathode active material may include a nickel-cobalt-manganese (NCM) lithium oxide. In this case, an NCM lithium oxide with an increased nickel content may be used.

A content of Ni of the NCM-based lithium oxide (e.g., a mole fraction of nickel among total moles of nickel, cobalt, and manganese) may be 0.6 or more, 0.7 or more, or 0.8 or more. In some embodiments of the disclosed technology, the content of Ni may be 0.8 to 0.95, 0.82 to 0.95, 0.83 to 0.95, 0.84 to 0.95, 0.85 to 0.95, or 0.88 to 0.95.

In some embodiments of the disclosed technology, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments of the disclosed technology, the cathode active material may include a Mn-rich-based active material, a Li rich layered oxide (LLO)/over lithiated oxide (OLO)-based active material, or a Co-less-based active material having a chemical structure or crystal structure represented by Formula 4.

[Formula 4] $p[Li_2MnO_3]\cdot(1-p)[Li_qJO_2]$

In Formula 4, $0<p<1$ and $0.9 \leq q \leq 1.2$ may be satisfied, and J may include at least one element among Mn, Ni, Co, Fe, Cr, V, Cu, Zn, Ti, Al, Mg, and B.

The electrode mixture layer 20 may further include a binder. The binder is not particularly limited. For example, the cathode mixture layer may include one or more kinds of binders such as styrene butadiene rubber (SBR), polytetrafluoroethylene, polyvinylidene fluoride, vinylidene fluoride/hexafluoropropylene copolymer, polyacrylonitrile, and polymethyl methacrylate.

In addition, the anode mixture layer may include any one selected from a rubber-based binder such as styrene-butadiene rubber (SBR), fluorine-based rubber, ethylene propylene rubber, butadiene rubber, isoprene rubber, and silane-based rubber; a cellulose-based binder such as carboxymethylcellulose (CMC), hydroxypropylmethylcellulose, methylcellulose, or an alkali metal salt thereof; and a combination thereof.

The electrode mixture layer 20 may further include a conductive material. The conductive material is not particularly limited. For example, the conductive material may include one or two or more of: graphite such as natural graphite or artificial graphite; carbon black, acetylene black, ketjen black, channel black, furnace black, lamp black, and summer black; a carbon-based material such as carbon fiber, carbon nanotubes (CNTs), and the like; metal powders or metal fibers such as copper, nickel, aluminum, and silver; conductive whiskers such as zinc oxide and potassium titanate; metal powders or metal fibers such as copper, nickel, aluminum, and silver; conductive whiskers such as zinc oxide and

potassium titanate; conductive metal oxides such as titanium oxide; or conductive polymers such as polyphenylene derivatives, or the like.

The electrode for a lithium secondary battery 100 according to the above-described examples may be manufactured by a manufacturing method thereof to be described below.

## Method of manufacturing of Electrode for a lithium secondary battery

A method of manufacturing an electrode for a lithium secondary battery 100 according to an embodiment includes forming an electrode mixture layer 20 and an insulating layer 30 on at least one surface of an electrode current collector 10, wherein the insulating layer 30 includes a copolymer, and the copolymer includes a copolymer including a repeating unit having an imide group and a rubber-based repeating unit. A detailed description of the electrode current collector 10, the electrode mixture layer 20, the insulating layer 30, and the like is overlapped with the above-described contents, so the description thereof is omitted.

In some embodiments of the disclosed technology, the electrode mixture layer 20 may be formed on at least one surface of the electrode current collector 10 by applying a slurry containing an electrode active material to at least one surface of the electrode current collector 10 and drying the electrode slurry at 60 to 200°C. The application method of the electrode slurry is not particularly limited. For example, the electrode slurry may be applied to the surface of the electrode collector 10 by a method such as slot die coating, bar coating, casting, or spraying.

In some embodiments of the disclosed technology, the electrode slurry may further include a solvent. The solvent is not particularly limited. For example, dimethyl sulfoxide (DMSO), isopropyl alcohol, N-methyl 2-pyrrolidone (NMP), acetone, water, or the like, may be used as the solvent. According to an embodiment, the solvent may be N-methyl 2-pyrrolidone (NMP). An amount of the solvent used is not particularly limited as long as it is sufficient to dissolve or disperse the components, and to have a viscosity that can exhibit excellent thickness uniformity when applied to a current collector, in consideration of an application thickness, manufacturing yield, and the like of the slurry.

In some embodiments of the disclosed technology, the insulating layer 30 may be formed on at least one surface of the electrode current collector 10 by applying an insulating coating composition to at least one surface of the electrode current collector 10 and drying the composition at 60 to 200°C. The method of applying the insulating coating composition is not particularly limited. For example, the insulating coating composition may be applied to the surface of the electrode current collector 10 by a method such as slot die coating, bar coating, casting, or spraying.

A formation sequence of the electrode mixture layer 20 and insulating layer 30 is not particularly limited. That is, within a range where no significant difference occurs in the characteristics of the finally formed electrode mixture layer 20 and insulating layer 30, a coating sequence of the electrode slurry and insulating coating composition is not particularly limited.

According to an embodiment, the electrode slurry and the insulating coating composition may be simultaneously applied to at least one surface of an electrode current collector 10 and then dried to form an electrode mixture layer 20 and an insulating layer 30 together.

According to another embodiment, the electrode slurry may be first applied to at least one surface of an electrode current collector 10, and then the insulating coating composition may be applied (i.e., the electrode slurry and the insulating coating composition may be applied sequentially), and then dried simultaneously to form an electrode mixture layer 20 and an insulating layer 30 together.

According to another embodiment, the electrode slurry may be first applied to at least one surface of an electrode current collector 10 and then dried to first form an electrode mixture layer 20, and then an insulating coating composition may be applied and dried to sequentially form an electrode mixture layer 20 and an insulating layer 30.

The insulating coating composition may include a copolymer including a repeating unit having an imide group and a rubber-based repeating unit. When a mixture of a polymer comprised of repeating units having the imide group and a polymer comprised of the rubber-based repeating units is applied as an insulating coating composition, phase separation may occur due to poor compatibility between the two polymers, and it may be impossible to manufacture an insulating layer 30. Therefore, when the insulating coating composition includes a copolymer including a repeating unit having an imide group and a rubber-based repeating unit, an insulating layer 30 may be stably manufactured.

A detailed description of the repeating unit having the imide group, the rubber-based repeating unit, the copolymer, and the like is overlapped with the above-described contents, so the description thereof is omitted.

The insulating coating composition may further include a solvent. The type of the solvent is not particularly limited. For example, dimethyl sulfoxide (DMSO), isopropyl alcohol, N-methyl 2-pyrrolidone (NMP), acetone, water, or the like, may be used as the solvent. According to an embodiment, the solvent can be N-methyl 2-pyrrolidone (NMP).

In some embodiments of the disclosed technology, a content of a copolymer included in the insulating coating composition may be from 5 wt% to 50 wt% based on a total insulating coating composition. For example, a content of a copolymer included in the insulating coating composition may be from 10 wt% to 40 wt%, 15 wt% to 35 wt%, 10 wt% to 30 wt%, or 15 wt% to 25 wt%, based on a total insulating coating composition. Specifically, the content of the copolymer

included in the insulating coating composition may be from 10 wt% to 20 wt% based on the total insulating coating composition.

In some embodiments of the disclosed technology, a content of a solvent included in the insulating coating composition may be from 50 wt% to 95 wt% based on a total insulating coating composition. For example, a content of a solvent included in the insulating coating composition may be from 60 wt% to 90 wt%, 65 wt% to 85 wt%, 70 wt% to 90 wt%, or 75 wt% to 85 wt%, based on a total insulating coating composition. Specifically, the content of the solvent included in the insulating coating composition may be from 80 wt% to 90 wt% based on the total insulating coating composition.

When the contents of the copolymer and the solvent included in the insulating coating composition are as described above, the coating processability can be improved while excellently dispersing the copolymer included in the insulating coating composition.

In some embodiments of the disclosed technology, the insulating layer 30 may be formed in a structure disposed on the non-coated portion of the electrode current collector 10 (see FIG. 2), or may be formed in a structure disposed to cover a portion of the electrode mixture layer from a portion of the non-coated portion (see FIGS. 1 and 3).

## Lithium secondary battery

A lithium secondary battery according to an embodiment includes the electrode for a lithium secondary battery 100 according to one of the above-described examples. Specifically, the lithium secondary battery may include a unit cell including the electrode for the lithium secondary battery 100 as an anode or a cathode.

In some embodiments of the disclosed technology, the unit cell may further include a separator between the cathode and anode. The separator is not particularly limited. For example, the separator may include a porous polymer film manufactured from a polyolefin-based polymer such as an ethylene homopolymer, a propylene homopolymer, an ethylene/butene copolymer, an ethylene/hexene copolymer, or an ethylene/methacrylate copolymer. In addition, the separator may include a nonwoven fabric formed of high-melting-point glass fibers, polyethylene terephthalate fibers, or the like.

In some embodiments of the disclosed technology, the lithium secondary battery may be manufactured by accommodating the above-described unit cell in a pouch, which is a battery case, and then injecting an electrolyte.

The electrolyte may include an organic solvent and a lithium salt. The organic solvent acts as a medium through which ions involved in an electrochemical reaction of the battery may move, and is not particularly limited. For example, the electrolyte may be used alone or in combination of two or more types of carbonate-based, ester-based, ether-based, ketone-based, alcohol-based or aprotic solvent, and when two or more types of electrolytes are mixed and used, a mixing ratio can be appropriately adjusted depending on the desired battery performance.

The lithium salt is dissolved in an organic solvent and acts as a source of lithium ions in the battery, enabling a basic operation of a lithium secondary battery and may be a material promoting the movement of lithium ions between the cathode and the anode. The lithium salt is not particularly limited, and any known material may be used at a concentration appropriate for the purpose. The electrolyte may further include a known solvent and a known additive to improve charge/discharge characteristics, flame retardancy characteristics, or the like as needed.

In some embodiments of the disclosed technology, the unit cell may not include a separator between the cathode and the anode, and may include a solid electrolyte. The solid electrolyte is not particularly limited. For example, the solid electrolyte may be an oxide-based solid electrolyte, a sulfide-based solid electrolyte, or a polymer-based solid electrolyte.

## Example

### 1. **Manufacturing of Electrode**

#### 1) **Composition for Insulating coating composition**

(1) Examples 1 to 4

A solution in which polyamideimide (PAI) grafted with hydrogenated nitrile butadiene rubber (HNBR) and a solvent (NMP) were mixed in a weight ratio of 15:85 was used as an insulating coating composition of Examples 1 to 4. In this case, a graft ratio of hydrogenated nitrile butadiene rubber (HNBR) to the polyamide imide (PAI) was adjusted differently according to Example, respectively, as shown in Table 1 below.

(2) Comparative Example 1

A solution in which polyamideimide (PAI) and a solvent (NMP) were mixed in a weight ratio of 15:85 was used as an insulating coating composition of Comparative Example 1.

(3) Comparative Example 2

A solution in which hydrogenated nitrile butadiene rubber (HNBR) and a solvent (NMP) were mixed in a weight ratio of 20:80 was used as an insulating coating composition of Comparative Example 2.

(4) Comparative Example 3

A solution in which polyamideimide (PAI), hydrogenated nitrile butadiene rubber (HNBR), and a solvent (NMP) were mixed in a weight ratio of 12.75:2.25:85 was used as an insulating coating composition of Comparative Example 3. In this case, the weight ratio of hydrogenated nitrile butadiene rubber (HNBR) and polyamide imide (PAI) was adjusted to 15:85.

**2) Manufacturing of Insulating layer samples**

The insulating coating compositions of Examples 1 to 4 and Comparative Examples 1 to 3 were applied to a polyethylene terephthalate (PET) film having a thickness of 125 μm, and then sufficiently dried in a hot-air oven at 120°C for 6 hours to form an insulating layer having a thickness of 20 μm. The dried insulating layer was removed from the PET film and used as an insulating layer sample.

**2) Manufacturing of Cathode**

A slurry containing a NCM-based cathode active material ($Li[Ni_{0.8}Co_{0.1}Mn_{0.1}]O_2$) was applied to one surface of aluminum foil (Al-foil), which is a cathode current collector, at a loading level of 20 $mg/cm^2$, as a cathode active material, the insulating coating composition manufactured in the Examples and Comparative Examples was applied from a portion of a non-coated portion to cover a portion of the mixture layer, and then dried by passing the same through a hot-air dryer at a temperature within a range of 60°C to 200°C, to manufacture a cathode including a cathode mixture layer and an insulating layer on one surface of a cathode current collector with the structure as shown in FIG. 1.

**2. Evaluation of Electrode**

**1) Swelling of Insulating layer**

An electrolyte in which a 1.5M of $LiPF_6$ electrolyte was added was prepared to a solvent mixed with ethylene carbonate (EC): dimethyl carbonate (DMC): ethyl methyl carbonate (EMC) in a volume ratio of 2:7:1. The insulating layer samples manufactured as described above were immersed in the electrolyte at a temperature of 25°C for 24 hours, and a mass of the insulating layer samples before and after immersion was measured, respectively, and a degree of swelling of the insulating layer was measured in % according to Equation 1 below were illustrated in Table 1 below, and the results thereof was illustrated in Table 1 below.

[00136] [Equation 1]

$$\text{Swelling ratio (\%)} = (W2-W1)/W1 \times 100$$

In Equation 1 above, $W_1$ is a mass of the insulating layer sample before electrolyte immersion, and $W_2$ is a mass of the insulating layer sample after drying at room temperature for 6 hours after electrolyte immersion.

**2) Elongation**

The insulating layer samples manufactured as described above was cut into a size of 100 mm x 10 mm to prepare a sample for measuring elongation. The sample was put into a UTM tensile tester and pulled up and down at a speed of 50 mm/s, and a length thereof extended until the sample was torn off was measured, and the elongation was calculated in %, and the results thereof was illustrated in Table 1 below.

**3) Manufacturing Process defects**

(1) Whether or not peeling is performed during electrolyte immersion

An electrolyte containing a 1.5M of $LiPF_6$ electrolyte was prepared to a solvent in which ethylene carbonate (EC): dimethyl carbonate (DMC): ethyl methyl carbonate (EMC) were mixed in a volume ratio of 2:7:1. When the electrode manufactured as described above was immersed in the electrolyte at 60°C for 120 minutes and then when full peeling occurred, it was evaluated as ◦, when partial peeling occurred, it was evaluated as Δ, and when no peeling occurred, it was evaluated as X, and the results thereof were illustrated in Table 1 below.

(2) Whether a non-coated portion is torn off during notching

When a non-coated portion of the cathode current collector is formed into a cathode tab by notching the electrode manufactured as described above, when an interface between the non-coated portion and the insulating layer is torn off, it was evaluated as ◦, when the interface therebetween was partially torn off or damaged, it was evaluated as Δ, and when the interface therebetween was not torn off, it was evaluated as X, and the results thereof were illustrated in Table 1 below.

(3) Rolling processability

In a process of rolling the electrode manufactured as described above to a density of 3.6g/cc, the number of fractures per 1000m were converted and evaluated, and the results thereof were illustrated in Table 1 below.

[Table 1]

| | Used material | Swelling ratio (%) | Elongation (%) | Manufacturing process defects | | |
|---|---|---|---|---|---|---|
| | | | | Whether or not peeling is performed during electrolyte immersion | Whether a non-coated portion is torn off during notching | Rolling processability |
| **Example 1** | PAI-HNBR* (85:15) | 6.9 | 53 | X | X | 0 time |
| **Example 2** | PAI-HNBR* (95:5) | 3.2 | 28 | X | X | 1 time |
| **Example 3** | PAI-HNBR* (70:30) | 8.6 | 61 | X | X | 0 time |
| **Example 4** | PAI-HNBR* (50:50) | 12.3 | 74 | X | X | 0 time |
| **Comparative Example 1** | PAI | 21 | 14 | X | ○ | 2 times |
| **Comparative Example 2** | HNBR | Partial dissolution | 507 | X | X | 0 time |

(continued)

| | Used material | Swelling ratio (%) | Elongation (%) | Manufacturing process defects | | |
|---|---|---|---|---|---|---|
| | | | | Whether or not peeling is performed during electrolyte immersion | Whether a non-coated portion is torn off during notching | Rolling processability |
| **Comparative Example 3** | PAI+HNBR** (85:15) | Partial dissolution | 43 | X | X | 0 time |

* PAI-HNBR: Polyamide-imide (PAI) grafted with hydrogenated nitrile-butadiene rubber (HNBR); a ratio in parentheses is a graft ratio (weight ratio) of hydrogenated nitrile-butadiene rubber (HNBR) to polyamide-imide (PAI).
** PAI+HNBR: Blending of hydrogenated nitrile butadiene rubber (HNBR) and polyamide-imide (PAI); a ratio in parentheses is a blending ratio (weight ratio) of polyamideimide (PAI) and hydrogenated nitrile butadiene rubber (HNBR).

Referring to Table 1 above, in Comparative Example 1, it can be confirmed that an insulating layer has relatively low elongation, and a phenomenon in which the boundary between the non-coated portion and the insulating layer is torn off during electrode notching occurs, and a relatively high number of fractures during electrode rolling, resulting in poor rolling processability. Although not intended to be bound by any particular theory, it is determined that this is due to the insulating layer includes only polyamideimide (PAI) having insufficient softness.

In addition, in Comparative Examples 2 and 3, it can be confirmed that the insulating layer is partially dissolved when impregnated with the electrolyte, making it unsuitable for use in lithium secondary batteries. Although not intended to be bound by any particular theory, it is determined that this is due to the property of hydrogenated nitrile butadiene rubber (HNBR) contained in the insulating layer to be dissolved in the electrolyte.

On the other hand, in Examples 1 to 4 in which the insulating layer includes polyamide-imide (PAI-HNBR) grafted with hydrogenated nitrile-butadiene rubber, it can be confirmed that the insulating layer has superior performance as compared to Comparative Examples 1 to 3 in terms of swelling/elongation of the insulating layer, manufacturing process defects, and the like. In particular, in Examples 1 and 3 in which the insulating layer includes PAI-HNBR having a graft ratio of polyamideimide (PAI) and hydrogenated nitrile butadiene rubber (HNBR) of 70:30 to 85:15, it can be confirmed that the swelling of the insulating layer is less than in Example 4 and the rolling processability is superior than in Example 2. Therefore, when the insulating layer includes a copolymer including a repeating unit having an imide group and a rubber-based repeating unit in a specific ratio, it is determined that the performance, such as insulating properties, heat resistance, peeling resistance, elongation, and the like, of the insulating layer may be improved and quality deterioration issues can be effectively prevented from occurring during the secondary battery manufacturing process to be described later.

As set forth above, according to an embodiment of the disclosed technology, it is possible to prevent low voltage defects from occurring in a lithium secondary battery may be suppressed.

According to another embodiment of the disclosed technology, it is possible to prevent ignition from occurring in a lithium secondary battery to improve safety.

According to another embodiment of the disclosed technology, it is possible to prevent quality defects from occurring during manufacturing an electrode for a lithium secondary battery.

According to another embodiment of the present disclosure, a yield in a process for manufacturing an electrode for a lithium secondary battery may be improved.

Only specific examples of implementations of certain embodiments may be described. Variations, improvements and enhancements of the disclosed embodiments and other embodiments may be made based on the disclosure of this patent document.

## Claims

**1.** An electrode for a lithium secondary battery, comprising:

an electrode current collector, and an electrode mixture layer and an insulating layer on at least one surface of the electrode current collector,
wherein the insulating layer includes a copolymer, and

the copolymer includes a repeating unit having an imide group and a rubber-based repeating unit.

2. The electrode for a lithium secondary battery of claim 1, wherein the imide group is represented by the following Formula 1,

[Formula 1]

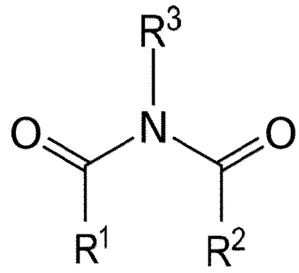

wherein $R^1$, $R^2$, and $R^3$ are independently hydrogen or an organic group, respectively.

3. The electrode for a lithium secondary battery of claim 1 or 2, wherein the repeating unit having the imide group further comprises an amide group.

4. The electrode for a lithium secondary battery of claim 3, wherein the amide group is represented by the following Formula 2,

[Formula 2]

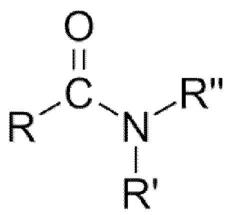

wherein R, R', and R" are independently hydrogen or an organic group, respectively.

5. The electrode for a lithium secondary battery of anyone of claims 1 to 4, wherein the repeating unit having the imide group includes a repeating unit comprising polyamideimide (PAI).

6. The electrode for a lithium secondary battery of anyone of claims 1 to 5, wherein the rubber-based repeating unit includes at least one of a styrene-butadiene rubber (SBR)-based repeating unit, a butadiene rubber (BR)-based repeating unit, a hydrogenated nitrile-butadiene rubber (HNBR)-based repeating unit, a nitrile-butadiene rubber (NBR)-based repeating unit, an acrylic rubber-based repeating unit, a butyl rubber-based repeating unit, and a fluorine rubber-based repeating unit.

7. The electrode for a lithium secondary battery of anyone of claims 1 to 6, wherein the copolymer comprises a graft copolymer in which a second block including a rubber-based repeating unit is grafted onto a first block including a repeating unit having an imide group.

8. The electrode for a lithium secondary battery of claim 7, wherein the first block includes a repeating unit having an imide group and an amide group, and
the second block includes a hydrogenated nitrile butadiene rubber (HNBR)-based repeating unit.

9. The electrode for a lithium secondary battery of claim 7 or 8, wherein the first block in the graft copolymer is included in an amount of 50 to 95 wt% based on a total weight of the graft copolymer.

10. The electrode for a lithium secondary battery of anyone of claims 7 to 9, wherein the second block in the graft

copolymer is included in an amount of 5 to 50 wt% based on the total weight of the graft copolymer.

**11.** The electrode for a lithium secondary battery of anyone of claims 1 to 10, wherein the insulating layer further comprises a ceramic material.

**12.** The electrode for a lithium secondary battery of anyone of claims 1 to 11, wherein the electrode current collector includes a non-coated portion on which an electrode mixture layer is not disposed on the electrode current collector, and
the insulating layer covers a portion of the non-coated portion and a portion of the electrode mixture layer.

**13.** The electrode for a lithium secondary battery of anyone of claims 1 to 11, wherein the electrode current collector includes a non-coated portion on which an electrode mixture layer is not disposed on the electrode current collector, and
the insulating layer is disposed on the non-coated portion.

**14.** A method of manufacturing an electrode for a lithium secondary battery, comprising:

forming an electrode mixture layer and an insulating layer on at least one surface of an electrode current collector, wherein the insulating layer includes a copolymer, and
the copolymer includes a repeating unit having an imide group and a rubber-based repeating unit.

**15.** A lithium secondary battery comprising:
the electrode for a lithium secondary battery of anyone of claims 1 to 13.

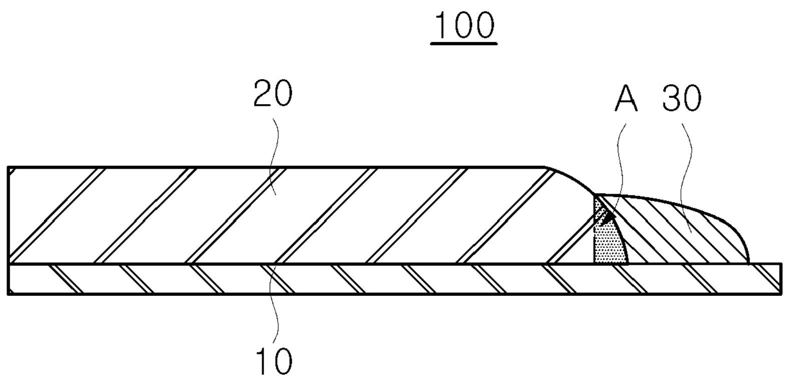


FIG. 1

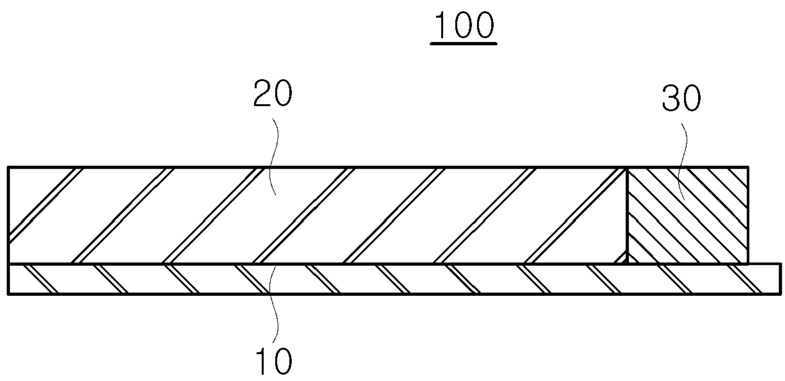


FIG. 2

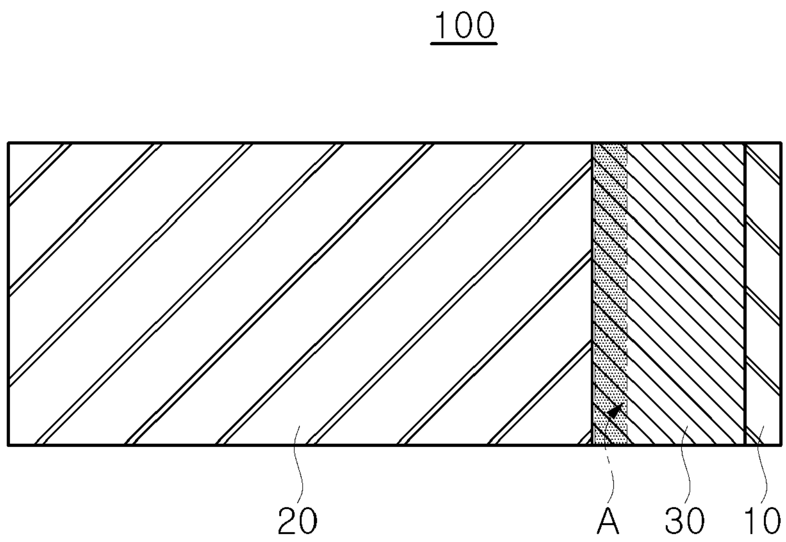


FIG. 3

Europäisches Patentamt
European Patent Office
Office européen des brevets

# EUROPEAN SEARCH REPORT

Application Number
EP 24 22 3009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 261 924 A1 (CONTEMPORARY AMPEREX TECHNOLOGY CO LTD [CN]) 18 October 2023 (2023-10-18) * page 1, paragraph 0003 - page 20, paragraph 0170; figures 1-3; tables 1, 2 * ----- | 1-15 | INV. H01M4/04 H01M4/13 H01M4/62 H01M4/66 H01M10/0525 H01M10/42 |
| A | US 2023/307650 A1 (JANG SEONG KEUN [KR] ET AL) 28 September 2023 (2023-09-28) * page 1, paragraph 0005 - page 7, paragraph 0107; claims 1-11; figures 1-5 * ----- | 1-15 | |
| A | US 2015/147624 A1 (YAMAFUKU TARO [JP] ET AL) 28 May 2015 (2015-05-28) * page 2, paragraph 0026 - page 9, paragraph 0136; figures 1-8; tables 1-5 * ----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 12 May 2025 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 22 3009

This annex lists the patent family members relating to the patent documents cited in the above-mentioned European search report. The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| EP 4261924 A1 | 18-10-2023 | CN 116848650 A | 03-10-2023 |
| | | EP 4261924 A1 | 18-10-2023 |
| | | JP 2024504544 A | 01-02-2024 |
| | | KR 20230106156 A | 12-07-2023 |
| | | US 2024014531 A1 | 11-01-2024 |
| | | WO 2023123038 A1 | 06-07-2023 |
| US 2023307650 A1 | 28-09-2023 | CN 115917779 A | 04-04-2023 |
| | | EP 4181268 A1 | 17-05-2023 |
| | | JP 2023541791 A | 04-10-2023 |
| | | US 2023307650 A1 | 28-09-2023 |
| | | US 2025038215 A1 | 30-01-2025 |
| | | WO 2023008953 A1 | 02-02-2023 |
| US 2015147624 A1 | 28-05-2015 | CN 104659368 A | 27-05-2015 |
| | | EP 2876711 A1 | 27-05-2015 |
| | | JP 6252841 B2 | 27-12-2017 |
| | | JP 2015103394 A | 04-06-2015 |
| | | KR 20150060511 A | 03-06-2015 |
| | | US 2015147624 A1 | 28-05-2015 |

EPO FORM P0459

For more details about this annex : see Official Journal of the European Patent Office, No. 12/82